# EUROPEAN PATENT APPLICATION

(11) **EP 2 485 447 A1**
(43) Date of publication of application: **08.08.2012**
(21) Application number: 11290075.8
(22) Date of filing: 07.02.2011
(51) Int. Cl.: H04L 27/26

(54) **Method to clip a digital signal**

(71) Applicant: Alcatel Lucent, 75007 Paris (FR)
(72) Inventor: Dartois, Luc ,, 91620 Nozay (FR)
(74) Representative: Croonenbroek, Thomas Jakob

(57) **Abstract**

A wideband radio signal is clipped in the time domain at a threshold defining the maximum amplitude of the signal, on the base of a mask having clipping levels. The clipping levels are iteratively calculated applying convergence gains for each sub-carrier.
Further, the clipping level of the mask are determined on the base of the control information of the signal like the load level, the modulation mode, the error sensitivity.

## Description

### BACKGROUND OF THE INVENTION

The present invention relates to the field of telecommunications and more specifically of clipping a digital signal.

The spreading of wireless radio access networks, like 3G, transitional 3G, or LTE (Long Term Evolution) and 4G mobile access networks, has led to the implementation of an important pool of transmitters/receivers.

These transmitters/receivers are mostly antennas, regularly set up, to cover wide areas, and base-stations covering network micro-cells.

A wireless network signal is transmitted in a radio band, defining an associated bandwidth. Said bandwidth is usually divided in radio sub-bands, and the radio sub-bands comprise different single carriers, corresponding to one Quadrature-Amplitude Modulation (QAM) using the Orthogonal Frequency Division Multiplex (OFDM). For example, for a LTE signal, the signal comprises around 1200 single carriers, obtained by 4, 16 or 64 quadrature-amplitude modulation of carrier radio bands of up to 20MHz.

In systems using OFDM, a large Peak to Average Power Ratio (PAPR) is required for the transmitted signal. This results from the quantity of information transmitted in the band. The signal consequently needs to be clipped at a defined threshold, in particular before being fed to the power amplifier of the transmitter in order to limit over sizing of the power amplifier by too much back off. The usual clipping methods use iterative clipping and filtering steps with a given clipping circle defined by the intrinsic properties of the power amplifier and a trade off with the acceptable transmitted signal distortion.

The usual clipping methods are tuned to be optimal at maximum load level. To do so, a difference signal is determined, generally in an iterative algorithm, that minimizes the error vector so that even at maximum load level, the error vector remains in a predetermined domain chosen according to the wanted signal quality and floor of error rate. In said methods, the constraints on the error tolerances remain the same whatever the load level and signal properties.

Since the usual methods are optimised to sustain the maximum load level, their efficiency decreases at low load level. In particular, since the envelope variability is less important at low load, the peak to average power ratio raises while signal quality improves, so that a peak to average power ratio of about 10 to 12 dB is reached at partial load, whereas 6 dB is usually considered sufficient. As a consequence, the signal quality is improved more than needed at low level, at the expense of power amplification over sizing due to high peak to average power ratio and therefore suboptimal use of power amplifier that looses efficiency.

### SUMMARY OF THE INVENTION

In order to overcome at least partially the aforementioned drawbacks and enable the best couple of peak to average power ratio and signal error at any traffic load, the invention has for object a method for clipping a wideband radio signal in the time domain at a threshold defining the maximum amplitude of the signal, said signal comprising at least one radio band comprising a plurality of single carriers, with the steps :
- an error tolerance is determined for the single carriers, and
- a difference signal is determined and subtracted from the wideband radio signal such that the difference signal apportions clipping noise among the different single carriers according to their respective error tolerance.

The method allows an adapted clipping of the signal, wherein the single carriers are protected according to their needs. The clipping is made content aware.

The method can furthermore have one or more of the following characteristics, taken in combination or separately.

The clipping threshold is determined according to the power load level and the volume of transmitted information contained in the radio bands and the single carriers.

The error tolerance of one radio band is determined according to at least one of the following criteria :
- the load level of said radio band
- the modulation mode of said radio band.

The error tolerance of one radio band comprising at least one single carrier is determined taking into account the orientation of the error vector for the at least one single carrier of the radio band and the position in the constellation diagram of the at least one single carrier.

The difference signal is determined iteratively.

The method uses fast Fourier transform to obtain an oversampled reference symbol.

For one radio band comprising at least one single carrier, the clipping noise per single carrier is strictly limited and cast taking into account the error tolerance and the modulation type.

For one radio band comprising at least one single carrier, the clipping noise per single carrier is limited statistically taking into account the error tolerance.

Another object of the invention is a clipping unit for clipping a wideband radio signal in the time domain, the signal comprising a plurality of radio bands, comprising means to :
- determine an error tolerance for the single carriers, and
- determine and subtract a difference signal such that the difference signal apportions spectral interferences among the different single carriers according to their respective error tolerance.

The clipping unit can have one or more of the following characteristics, taken in combination or separately.

It further comprises means to determine a clipping threshold according to the load level of the radio bands.

It further comprises means to acquire control information used to determine the error tolerance for the single carriers.

The control information comprises at least one of the following information :
- the load level of at least one radio band.
- the modulation mode of at least one radio band.

The control information comprises for at least one radio band comprising at least one single carrier, the orientation of the error vector for the at least one single carrier of the radio band and the position in the constellation diagram of the at least one single carrier.

The clipping unit comprises means configured to perform a fast Fourier transform of the single carrier to obtain an oversampled reference symbol.

Eventually, a further object of this invention is a network node comprising a clipping unit as described above.

Further characteristics of the invention will appear at the reading of the following description, describing by way of example different embodiments with reference to the accompanying drawings, in which :
- Fig. 1 represents schematically the steps of one embodiment of the method
- Fig. 2 represents schematically a constellation diagram of a modulated carrier inside a wideband signal radio band like an OFDM system.

In all figures the same references relate to the same elements.

### DETAILED DESCRIPTION OF THE INVENTION

The invention relates to a method for clipping a digital signal, in particular for amplification and emission in a wireless wideband radio access network.

In wideband radio access networks, the frequency domain is divided in radio bands, and each radio band comprises a plurality of single carriers. For example, in the LTE (Long Term Evolution of WCDMA using OFDM orthogonal Frequency division multiplexing), the frequency band is divided in radio bands of about 20Mhz range. Each radio band is divided in single carriers using Quadrature-Amplitude Modulation (QAM), in 4, 16 or 64 single carriers, leading to up to 1200 single carriers for one signal.

For each single carrier a spectrum and amplitude domain can be defined, within which the signal content is statistically distributed. Such domains stretch around the ideal signal points in the constellation diagram. At signal processing, clipping and emission, the signal is shifted and/or scattered, due in particular to linearity defaults, allowing to define an error vector, corresponding to the shifting in the inphase-quadrature (IQ) space that is acceptable. Said error vector must remain as small as possible in amplitude so that the different signals do not get close or overlap each other, thus leading to information loss due to the impossibility for the receiver to distinguish the modulation states.

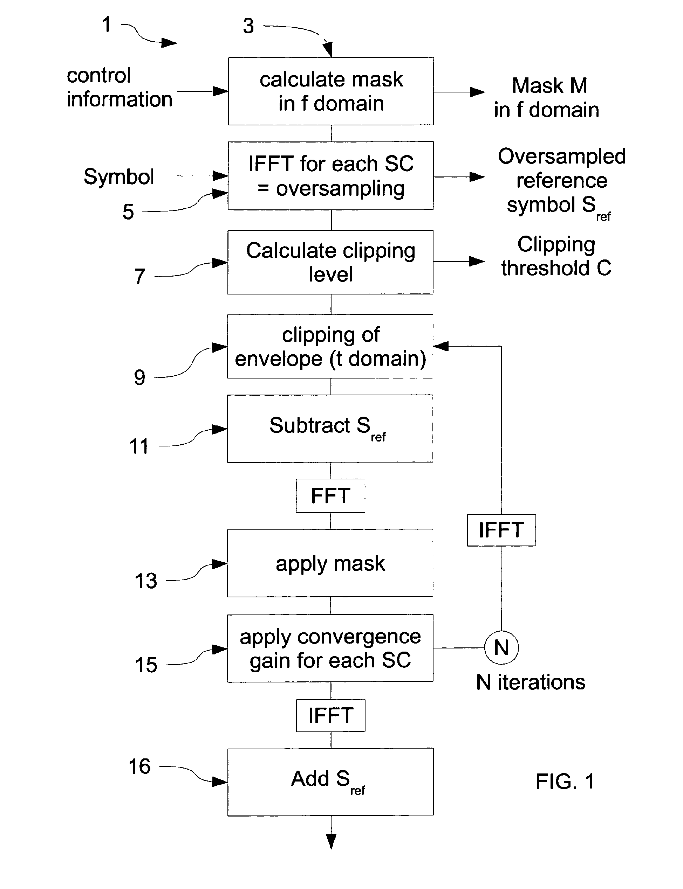

Figure 1 is a schematic representation of the different steps of an embodiment of the method 1 to clip a digital wideband radio signal in the time domain according to the invention.

In a first step 3, the mask M to apply on the clipping noise on each single carrier is calculated, in the frequency domain. To calculate said mask M, control information, containing information on the current use of each radio band and/or single carrier, can be used.

The mask M is used to determine the maximum amount of clipping noise in terms of error vector and signal scattering that is acceptable for each single carrier, both for used single carrier in that symbol period and unused ones, the method obviously authorizing more noise to be added on unused carriers than on used carriers and even less noise on carriers transporting more information (higher order modulations like 64QAM).

The control information can be determined by the server performing the clipping, by analysing the different carriers. Alternatively, the modem generating the raw signal also generates said control information, and directly provides it as input for the clipping algorithm 1.

The control information may contain information on the load level of the radio bands and/or single carriers of the signal, to allow more intense error protection of the intensely used carriers. In particular, no limitation is set for unused radio sub carriers. For unused radio bands the noise level is predefined according to the spectrum mask required by the operator. This is also part of the mask M.

The control information may also contain information such as the modulation mode of the radio bands, for example whether they are modulated in 4, 16 or 64 QAM. Since the single carriers are closer to each other in IQ space with increasing QAM order, higher order QAM radio bands require a better error vector minimization.

Furthermore, the control information may contain an indicator of the error sensitivity of the data contained in the symbol. For example if the symbol encodes a voice on IP (VoIP) packet, it does not require best error vector minimization effort, since the contained data can suffer a certain amount of distortion without becoming unusable. If the encoded packets are error protected at content level, for example using forward error correction by redundancy of crucial packets, the error tolerance can also be adapted.

The pilot information carriers, carrying crucial pilot information about the transmitted symbol should always be error protected at maximum level.

The mask M contains in substance a tolerated clipping noise domain for the single carriers. While applying said mask M, the clipping noise can either be cast strictly or statistically within these boundaries.

Strict casting of the clipping noise is the hard cutting of the difference signal components in the considered single carrier that are beyond the tolerated domain. By using this method, a faster error vector minimization is reached, but more iterations are necessary to obtain convergence of the clipping noise.

Statistical casting of the clipping noise allows a certain quantity of noise beyond the domain, with considerations on both the distance to the boundaries and amount of out of boundaries noise. By using this method, a faster convergence is reached, but the error vector is reduced more slowly.

In a second step 5, an inverse Fourier transform, here inverse fast Fourier transform, is performed on the frequency domain representation of the wanted symbol to transmit. This leads to the obtaining of an oversampled reference symbol S_{ref} in the time domain, using the property well known by people of the art that with the right zero padding of the input signal (adding no energy on unused carriers), one can obtain more single points also in time domain acting as a controlled oversampling of the signal, a method being useful for better determination of signal envelope overshoots.

In the following step 7, the clipping level C per radio band is calculated. The clipping level C is in particular determined according to the average information content in the radio band and eventually the overall information content of the other radio bands of the signal.

The clipping level C can be directly calculated from mask information obtained at step 3. As an example it can be easily calculated or tabulated as a growing function of the number of used carriers and bands and of the sum of the modulation orders of all used carriers.

The clipping level C is taken higher at high average information content, and decreases with said information content, in relation with the average transmitted power but usually according to Shannon theorem the average transmitted power is also homothetic to the volume of transmitted information. This allows to keep the peak to average power ratio at a quasi constant level, for example 6 dB, even at low information content. In a variant, one can target a constant distortion error vector magnitude, for example 6%, at each power and information load level with according decrease of peak to average power ratio when information load is decreasing.

According to the clipping level C, an adapted drain voltage can be chosen for the amplifiers of the downstream amplification stage. This allows energy savings in comparison to already existing systems where the amplifiers are always polarised for maximum capacity.

The following steps 9 to 15 are part of a loop.

At first, in step 9, the signal is clipped. The input of this step is the oversampled reference symbol S_{ref}, and the calculated difference signal, forced to zero at the initial round. In the first iteration the clipping can be done according to any usual method, for example using a hardclipping function cutting off the signal at the clipping level C determined according to the radio bands, that is limiting the envelope to the threshold C without any change in signal phase.

In step 11 the oversampled reference symbol S_{ref} is subtracted, to isolate the difference signal. The difference signal which is exactly the error induced by clipping is then transposed in the frequency domain, using the Fourier transform or fast Fourier transform FFT.

The mask M is then applied in step 13 to the difference signal in the frequency domain, for the single radio bands and single carrier. By applying said mask M, the clipping noise content of less error tolerant single carriers is reduced, but the overall clipping efficiency is reduced. The full loop iterations are performed at the chosen oversampling ratio and the loop acts as 2 interleaved functions: oversampling and clipping with the advantage that clipping at higher frequency enables an improved estimation of the clipping positions and a more precise clipping noise spectral control at a reasonable processing cost, thanks to fast algorithms in loop (FFT and IFFT)

To control the convergence speed and/or probability of convergence within a certain number of iterations, a convergence gain is applied to the masked noise in frequency domain in step 15. This convergence gain is by default the flat unity 1, and may depend on the single carrier error tolerance and the current iteration number N.

With a convergence gain slightly higher than one, the difference signal in the considered single carrier increases at each iteration, leading to a rapid reduction of the peak to average power ratio for the considered carrier, but needing more careful control of even and odd iterations to avoid oscillations of the noise.

With a convergence gain slightly lower than one, the reduction of the peak to average ratio is slower, but the overall convergence is secured.

The obtained difference signal is then transposed in the time domain, using inverted Fourier transform or inverted fast Fourier transform IFFT. The loop is then closed by using the obtained difference signal in a further iteration of step 9 to clip the signal.

As the number of iterations increases, the convergence gains of one or more single carriers can be changed. For example, some single carriers may have initially a gain higher than one, and after a certain amount of iterations, the gain is set to 1 or a value inferior to 1. Alternatively or in addition, if the peak to average power ratio is still higher than a threshold value after a certain number of iterations, the convergence gain is then increased for one or more single carriers.

The number of iterations until convergence is for a simulated 64 QAM, 20 MHz radio bands in a LTE (Long Term Evolution) wideband signal around 30, even at maximum load. If the processing speed is high enough, the loop interruption condition can be set using convergence considerations, but to avoid lagging of symbols, a maximum number of iterations can be set independently of said considerations.

After the N iterations of the loop, the output of step 15, which is the masked difference signal in frequency domain, is set back in time domain with inverse fast Fourier transform (IFFT). In a last step 16, the final input is calculated by subtracting the difference signal in time domain to the oversampled reference symbol S_{ref}.

In an alternative embodiment, the output of step 9 after the N iterations can be directly used as output of the algorithm 1.

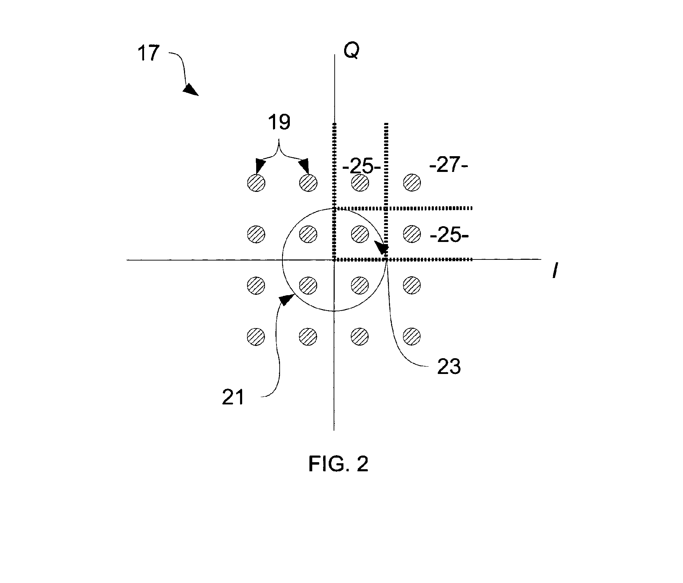

Figure 2 is a schematic representation of a constellation diagram of a 16 QAM signal, such as one that could be used in a radio band of a wideband signal. The constellation diagram 17 is represented in the IQ space, the horizontal axis *I* corresponding to inphase signals, the vertical *Q* axis corresponding to quadrature phased signals.

The single carrier constellation is depicted by sixteen circles 19, disposed in regular spacing, four per quarter plane. Each circle 19 represent the clipping noise that would be generated by previous blind clipping method, where the noise is statistically the same for all modulation states of the carriers.

A circle 21, centred on the axis origin highlights the 4 inner constellation states that need careful mask protection due to the fact that they have neighbours in each directions and that added clipping noise need to be tightly cast to avoid confusion with neighbour states.

The noise casting can be a circle like a clipping circle for the noise contribution limiting typically the noise to slightly less than half distance to next constellation state or directly limited to value corresponding to wanted error or error vector magnitude for the considered single carrier.

On picture 2, one can see that according to the position in the constellation diagram of the single carrier, the processing of said single carrier must be adapted. For example, the clipping noise level of the 12 constellation states at the periphery of the diagram can accept more noise in some directions

The casting domains 23 of this type are contained within a quadrangle globally centred on their carrier 17, these are the four inner states of the constellation

The second type of error vector casting domain 25 corresponds to the edges of the constellation diagram 17 that are not in a corner. For said states, no neighbouring state is present in one direction along *I* or *Q.* In this direction the error vector can be extended, allowing a higher freedom for faster convergence of clipping loop.

The third type of error vector casting domain 27 is in the corner of the constellation diagram 17. For such states no neighbouring state is present in one direction along I and in one direction along *Q*. Consequently, the error vector can be extended along the two directions, in a quarter plane.

In a band, usually during a given symbol period, different groups of subcarriers may have different modulation types and different requirements for level of information protection. The fact of adaptively casting the clipping noise to each type of modulation of each individual carrier and each individual constellation point optimizes the method at symbol period level.

In the example of QAM OFDM scheme, one can see that there are 3 modulations : 4QAM, 16QAM, and 64QAM. Each having some of the above described types of constellation states

The highest degree of freedom to cast clipping noise to obtain a better EVM, and peak to average power ratio couple is for 4QAM, where the 4 states are on a corner, corresponding to case 27.

For the respective types 23, 25 and 27 one has for the different QAM orders :

| | | | |
|---|---|---|---|
| 4QAM | 0 | 0 | 4 |
| 16QAM | 4 | 8 | 4 |
| 64QAM | 36 | 24 | 4 |

If the control information comprises information about the relative position of the carrier in the constellation diagram, the mask M can be calculated in a way taking into account the degrees of freedom regarding the error vector and the noise distribution. Thus, the convergence speed and overall efficiency of the process 1 can be improved.

The mask M can be considered as a frequency domain mask that defines for each carrier the level of authorized noise for inner constellation states and according to the used QAM order and state position for each symbol period and carrier. More freedom in specific directions is allowed for states at the periphery or corners of the constellation.

The frequency domain masks considers 4 types of carriers or frequency positions:
- carriers where no signal exist but perfect spectrum is required leading to minimal authorized noise,
- carriers where modulation state corresponds to inner state of constellation leading to noise cast to wanted EVM limit for this carrier,
- carriers where modulation state is on the perimeter of the constellation leading to one or two directions of complex noise with no limit,
- carriers within the transmit band unused during symbol duration due to partial load of the system leading to authorized noise without limit.

By making the clipping process and the associated clipping unit aware of the content, the invention allows a clipping dynamically adapted to the instant network use.

The adapting of the clipping threshold C to the power and information content load level allows to dynamically control the drain voltage of the amplifiers in the downstream amplification stage of the transmitters in which the invention is implemented. By adapting the drain voltage during low load periods like at night, significant energy savings can be done.

Furthermore, by taking into account the error tolerance of the signal content, the clipping noise is distributed between the single carriers so that it is apportioned according to their respective tolerance. Thus, the error protection coding dynamically adapts itself to the content : the clipping noise that cannot be cast in error sensitive carriers or radio bands will be cast in error tolerant or unused carriers. Consequently, an improved overall error protection efficiency (better EVM for same peak to average power ratio) during the clipping is expected.

For example on a LTE 20MHz carrier this method exhibits around 6% EVM at full load with 64QAM (most severe case) with peak to average power ratio around 5.8dB.

At part load of 20%, corresponding to night traffic for example, the same method automatically keeps the same EVM at 6% and can reduce the peak to average power ratio down to 3dB with not more than 10 iterations and the algorithm natively acts as oversampler of the clipped signal, which is is directly coming out at 122.88MSPS with a reference signal S_{ref} input in frequency domain at 30.72MSPS.

## Claims

1. A method for clipping a wideband radio signal in the time domain at a threshold defining the maximum amplitude of the signal, said signal comprising at least one radio band comprising a plurality of single carriers (19), with the steps :
- an error tolerance is determined for the single carriers (19), and
- a difference signal is determined and subtracted from the wideband radio signal such that the difference signal apportions clipping noise among the different single carriers (19) according to their respective error tolerance.

2. The method of claim 1, wherein it further comprises the step :
- the clipping threshold (C) is determined according to the power load level and volume of transmitted information contained in the radio bands and the single carriers (19).

3. The method of claim 1 or 2, wherein the error tolerance of one radio band or single carrier is determined according to at least one of the following criteria :
- the power load level and information content of its radio band,
- the modulation mode of its radio band.

4. The method according to any of the precedent claims, wherein the error tolerance of one single carrier (19) is determined taking into account the orientation of the error vector for the at least one single carrier (19) of the radio band and the position in the constellation diagram of the at least one single carrier (19).

5. The method according to any of the precedent claims, wherein the difference signal is determined iteratively.

6. The method according to any of the precedent claims, wherein fast Fourier transform is used to obtain an oversampled reference symbol (S_{ref})

7. The method according to any of the precedent claims, wherein for one radio band comprising at least one single carrier (19), the clipping noise per single carrier (19) is strictly limited taking into account the error tolerance.

8. The method according to any of claims 1 to 6, wherein for one radio band comprising at least one single carrier (19), the clipping noise per single carrier (19) is limited statistically taking into account the error tolerance.

9. Clipping unit for clipping a wideband radio signal in the time domain, the signal comprising a plurality of radio bands, comprising means to :
- determine an error tolerance for the single carriers (19), and
- determine and subtract a difference signal such that the difference signal apportions spectral interferences among the different single carriers (19) according to their respective error tolerance.

10. Clipping unit according to claim 9, wherein it further comprises means to determine a clipping threshold according to the load level of the radio bands.

11. Clipping unit according to claim 9 or 10, wherein it further comprises means to acquire control information used to determine the error tolerance for the single carriers (19).

12. Clipping unit according to claim 9, 10 or 11, wherein the control information comprises at least one of the following informations : the load level of at least one radio band,
- the modulation mode of at least one radio band.

13. Clipping unit according to any of claims 9 to 12, wherein it comprises means configured to perform a fast Fourier transform of the single carrier signals to obtain an oversampled reference symbol (S_{ref}).

14. Clipping unit according to any of claims 9 to 13, wherein the control information comprises for at least one radio band comprising at least one single carrier (19), the orientation of the error vector for the at least one single carrier of the radio band and the position in the constellation diagram of the at least one single carrier (19).

15. Network node comprising a clipping unit according to any of claims 9 to 14.

## Amended claims

### Amended claims in accordance with Rule 137(2) EPC.

**1.** A method for clipping a wideband radio signal in the time domain at a clipping threshold (C) defining the maximum amplitude of the signal, said signal comprising at least one radio band comprising a plurality of single carriers (19), with the steps :
- a mask (M) is determined, containing a tolerated clipping noise domain for the single carriers,
- a difference signal is determined by subtracting to the wideband radio signal the wideband radio signal clipped according to any method,
- the mask (M) is applied to the difference signal, limiting the clipping noise in the different carriers,
- the difference signal on which the mask (M) has been applied is subtracted to the wideband radio signal to obtain the clipped signal in output,
**characterized in that** the mask (M) is determined using control information containing an indicator of the error sensitivity of the data contained in the single carriers.

**2.** The method of claim 1, **characterized in that** it further comprises the step :
- the clipping threshold (C) is determined according to the power load level and volume of transmitted information contained in the radio bands and the single carriers (19).

**3.** The method of claim 1 or 2, **characterized in that** the control information further contains at least one of the following :
- the power load level and information content of its radio band,
- the modulation mode of its radio band.

**4.** The method according to any of the precedent claims, **characterized in that** the control information comprises information about the relative position of the single carrier in the constellation diagram, and **in that** the mask (M) is calculated in a way taking into account the degrees of freedom regarding the directions (*I, Q*) in which the error vector can be extended when no neighbouring constellation state is present.

**5.** The method according to any of the precedent claims, **characterized in that** the steps of determining the mask (M), of determining the difference signal and of subtracting the difference signal are repeated in a loop by using the output of the precedent iteration as wideband radio signal clipped according to any method in the step of determining the difference signal.

**6.** The method according to any of the precedent claims, **characterized in that** for one radio band comprising at least one single carrier (19), the clipping noise per single carrier (19) is strictly limited taking into account the error tolerance.

**7.** The method according to any of claims 1 to 5, **characterized in that** for one radio band comprising at least one single carrier (19), the clipping noise per single carrier (19) is limited statistically taking into account the error tolerance.

**8.** Clipping unit for clipping a wideband radio signal in the time domain, the signal comprising a plurality of radio bands, comprising means configured to :
- determine a mask (M), containing a tolerated clipping noise domain for the single carriers,
- isolate a difference signal by subtracting the wideband radio signal to the wideband radio signal clipped according to an usual method,
- apply the mask (M) to the difference signal, limiting the clipping noise in the different carriers,
- the difference signal on which the mask (M) has been applied is subtracted to the wideband radio signal to obtain the final clipped signal in output,
**characterized in that** the mask (M) is determined using control information containing an indicator of the error sensitivity of the data contained in the single carriers.

**9.** Clipping unit according to claim 8, **characterized in that** it further comprises means to determine a clipping threshold according to the load level of the radio bands.

**10.** Clipping unit according to claim 9 or 10, **characterized in that** the control information comprises at least one of the following inf ormations :
- the load level of at least one radio band,
- the modulation mode of at least one radio band.

**11.** Clipping unit according to any of claims 9 to 10, **characterized in that** the control information comprises for at least one radio band comprising at least one single carrier (19), information about the relative position of the single carrier in the constellation diagram, and **in that** the mask (M) is calculated in a way taking into account the degrees of freedom regarding the directions (*I*, *Q*) in which the error vector can be extended when no neighbouring constellation state is present.

**12.** Network node comprising a clipping unit according to any of claims 8 to 11.
